Europäisches Patentamt

(19) European Patent Office

Office européen des brevets

(11) Publication number: **0 143 391 B1**

# EUROPEAN PATENT SPECIFICATION

(45) Date of publication of patent specification: **15.01.92**  (51) Int. Cl.⁵: **A23J  3/04**, A23J 3/14, A23J 3/16

(21) Application number: **84113704.5**

(22) Date of filing: **13.11.84**

(54) **Food composition.**

(30) Priority: **14.11.83 BE 211869**
           **07.05.84 BE 212889**

(43) Date of publication of application:
     **05.06.85 Bulletin  85/23**

(45) Publication of the grant of the patent:
     **15.01.92 Bulletin  92/03**

(84) Designated Contracting States:
     **AT BE CH DE FR GB LI LU NL SE**

(56) References cited:
     **WO-A-82/03749**
     **GB-A- 2 085 273**
     **US-A- 4 209 545**

(73) Proprietor: **Vanlommel, Florent H.**
     **Gerhagenstraat 68**
     **B-3980 Tessenderlo(BE)**

(72) Inventor: **Vanlommel, Florent H.**
     **Gerhagenstraat 68**
     **B-3980 Tessenderlo(BE)**

(74) Representative: **Pieraerts, Jacques et al**
     **Bureau Gevers S.A. rue de Livourne 7 bte 1**
     **B-1050 Bruxelles(BE)**

EP 0 143 391 B1

## Description

This invention relates to a new and original use of partially known food compositions allowing to produce bread without a rising agent.

The invention has for an object to realize a bread or a bread-like final product having a low carbohydrate-content.

There are many food products on the market which contain no or very few carbohydrates and, as such, are proposed for replacing bread to persons starting or engaged in a slimming cure. Those products have all the shape or the external aspect of snacks, biscuits or crackers. They can be used with success, but the use of these carbohydrate-low products causes a complete change in the feeding habits of the user and it is known that this compulsory change is in a large number of cases the reason why the slimming cure is not successful.

It has been demonstrated that changing throuroughly the "eating philosophy" is very disturbent and may lead to abandoning the slimming cure.

It is a fundamental object of the invention to propose the use of partially known food compositions to produce a bread or a bread-like product allowing the use of butter, cheese, marmelade, etc. without prejudice to the final object, i.e. a diet with low carbohydrates.

To realize this object according to the application it is proposed to use a food composition consisting of:

a) 50-70 percent by weight of the total weight of the composition of instant sodium caseinates, cold soluble or instant calcium caseinates or mixtures thereof;

b) 5-25 percent by weight of the total weight of the composition of full-fat soya flour, fat-free soya flour or mixtures thereof;

c) 5-25 percent by weight of the total weight of the composition of wheat gluten

d) the remainder of the composition consisting of one of the elements selected from brans originating from wheat, rice or corn and, optionally, wheat germs, carboxymethylcellulose, alginates, cold gelatines, salt, pepper, vanilla and coffee.

It has already been proposed by UK 2 085 273 to mix together acid casein with soya protein and a small amount of gluten to obtain by two steps or two zones extrusion at 120° and 180°C a brittle snack product.

For the reasons set forth in the introduction it is not possible to realize a bread-like structure after a normal baking process. The bread-like structure seems to be essentially the result of the mixing of instant sodium and calcium caseinates with soya flour. Cold soluble caseinates are well known products and one example of the preparation of a blend of cold soluble or instant caseinate and soya protein is given in US patent 4,209,545.

The properties of a baked product obtained by mixing cold soluble sodium caseinate, cold soluble calcium caseinates with soya flour were never observed.

Other details and advantages of the invention will stand out from the following description of the use of a food composition according to the invention. This description is only given by way of example and does not limit the invention.

The composition according to the invention provides products which are used as substitutes for bread, and breadlike products. Up to now, said various compositions could only be obtained by making use of flour and starches.

By using carbohydrate-free or carbohydrate-poor additives, with very suitable baking properties, there are now obtained various products which may be used as substitutes for bread. Said additives are protein-rich components possibly supplemented with non-reacting fillers such as cellulose or crystalline cellulose; sugars such as pentosanes which do not react in the same way as conventional carbohydrates in the body, high-value polysaccharides (guar gum, carob-bean flour, xanthane gum, alginates, carragenates)and similar products. Said various additives may be called "galacto-mannans".

One example will be given hereinafter for a composition which may be used for the defined object.

1000 g instant calcium caseinate

100 g gluten

400 g bran

100 g soy-flour, full-fat

50 g salt

The combination of instant calcium caseinate - milk protein - and bran is intended for baking a carbohydrate-free small bread, in all possible shapes, whereby the bread taste remains. While natural bread requires a rising agent to rise, generally this is baker yeast, with this preparation no natural rising agent, nor synthetic or chemical rising agent is required. The structure of the small bread is obtained during the baking process and more particularly due to the typical property which instant calcium caseinate imparts with a liquid such as water, milk, eggs, fats or a combination thereof.

Soy-flour, full-fat or not, or in the isolated form thereof, improves the crumb structure and increases the bread taste. The wheat proteins-gluten - are cold-binding and stiffen the dough, so that said dough may be worked industrially (breadwise). They further act also to improve the bread taste.

Wheat brans increase the bread taste and add minerals on a large scale. Both crystalline cellulose and brans may be added to the composition.

Wheat germs size the dough. They also act to provide natural E vitamin, but they modify very slightly the baking properties.

Salt improves the moisture retention and improves the taste. Spices such as notably curcuma modify the bread taste.

The preparation of the bread occurs without any addition of natural or synthetic or chemical yeast. All the ingredients for the preparation of the end product are added simultaneously or separately. The addition of yeast products imparts no change to the formula.

1000 g powder mixture for use according the the invention

1000 g egg product (egg, whole egg, albumen or egg portions in no-natural proportions)

500 g water

200 g butter or other fats, such as baking fats, lard, margarine, oil sorts.

After being added together, said products are kneaded for a few moments until an homogeneous dough is obtained. Neither the kneading period, nor the kneading rate have any influence on the structure of the end product. The swollen dough is baked inside an oven which has or has not been pre-heated. All possible baking shapes such as sandwiches, small round bread, etc., are possible. The addition of fruit such as raisins, does not change in any way the structure, but actually the taste.

The "small bread" has a comparable structure to bread, forms a firm crust, tastes as freshly-baked bread. There is a definite resistance to chewing.

Preserving by deep-freezing of the baked small bread does not cause any structure change, nor a taste change after deep-freezing.

## Claims

1.  Use of a food composition allowing to produce breads or bread-like products without incorporating a rising agent, which composition is comprised of:
    a) 50-70 percent by weight of the total weight of the composition of instant sodium caseinates, cold soluble or instant calcium caseinates or mixtures thereof;
    b) 5-25 percent by weight of the total weight of the composition of full-fat soya-flour, fat-free soya flour or mixtures thereof;
    c) 5-25 percent by weight of the total weight of the composition of wheat gluten;
    d) the remainder of the composition consisting of one of the elements selected from brans originating from wheat, rice or corn and, optionally, wheat germs, carboxymethylcellulose, alginates, cold gelatines, salt, pepper, vanilla and coffee.

## Revendications

1.  Utilisation d'une combinaison d'aliments pour préparer des pains ou des produits semblables au pain sans ajouter d'agent de levage. Cette combinaison comprend:
    a) des caséinates de sodium instantanés, des caséinates de calcium solubles à froid ou instantanés ou des mélanges de ceux-ci, à raison de 50-70 pour cent du poids total de la composition;
    b) de la farine de soja grasse, de la farine de soja maigre ou des mélanges de celles-ci, à raison de 5-25 pour cent du poids total de la composition;
    c) du gluten de froment, à raison de 5-25 pour cent du poids total de la composition;
    d) La reste de la composition comprenant un des éléments suivants: son de froment, de riz ou de maïs et, éventuellement, germes de froment, carboxyméthylcellulose, alginates, gélatines froides, sel, poivre, vanille et café.

## Patentansprüche

1.  Verwendung einer Lebensmittelzusammensetzung, die es erlaubt, Brotprodukte oder brotähnliche Produkte herzustellen ohne Beifügung eines Treibmittels. Diese Zusammensetzung lautet wie folgt:
    a) 50-70 Prozent des Gesamtgewichtes der Zusammensetzung bestehend aus gebrauchsfertigen Natriumkaseinaten, kaltlöslichen oder gebrauchsfertigen Kalziumkaseinaten oder Mischungen davon.
    b) 5-25 Prozent des Gesamtgewichtes der Zusammensetzung bestehend aus vollfettem Sojamehl, fettfreiem Sojamehl oder Mischungen von beiden.
    c) 5-25 Prozent des Gesamtgewichtes der Zusammensetzung bestehend aus Gluten.
    d) der Rest der Zusammensetzung bestehend aus einem der folgenden Elemente: Weizen-, Mais- oder Reiskleie und - gegebenenfalls - Weizenkeimen, Carboximethylzellulose, Alginaten, kalten Gelatinen, Salz, Pfeffer, Vanille und Kaffee.